# EUROPÄISCHE PATENTANMELDUNG

(11) **EP 0 940 106 A2**
(43) Veröffentlichungstag der Anmeldung: **08.09.1999**
(21) Anmeldenummer: 99103031.3
(22) Anmeldetag: 16.02.1999
(51) Int. Cl.: A47B 95/04

(54) **Kantenelement**

(30) Priorität: 24.02.1998 GB 9803872
(71) Anmelder: REHAU AG + Co, 95111 Rehau (DE)
(72) Erfinder: Kerridge, Steven Mark, Ross on Whye,Herefordshire HR9 5 QN (GB); Romstedt, Jochen, Slough, SL3 6EZ (GB)

(57) **Zusammenfassung**

Die Erfindung betrifft ein Kantenelement. Derartige Elemente werden in verschiedenen Industriezweigen, wie z. B. der Möbelindustrie und der Automobilindustrie in den unterschiedlichsten Anwendungen eingesetzt. So ist beispielsweise in der Möbelindustrie üblich, Tischplatten mit Kantenband zu versehen, das sowohl der Erhöhung der Schlagfestigkeit als auch dekorativen Zwecken dient. Das hier vorgeschlagene Kantenelement besteht aus einer ersten Komponente aus Kunststoff und einer zweiten streifenförmigen Komponente aus Kunststoff mit freiliegendem Rand, die an einer Stelle mit der ersten Komponente verbunden ist. Weiterhin sind Teile zur Befestigung des besagten freiliegenden Randes der zweiten Komponente an der ersten Komponente vorhanden, und zwar mit einigem Abstand von der Verbindungsstelle zwischen erster und zweiter Komponente, so daß die zweite Komponente die erste Komponente mindestens teilweise bedeckt.

## Beschreibung

Diese Erfindung bezieht sich auf ein Kantenelement. Derartige Elemente werden in verschiedenen Industriezweigen, z.B. der Möbelindustrie und der Automobilindustrie, in den unterschiedlichsten Anwendungen eingesetzt. So ist es beispielsweise in der Möbelindustrie üblich, Tischplatten mit Kantenband zu versehen, das sowohl zur Erhöhung der Schlagfestigkeit als auch dekorativen Zwecken dient.

Um insbesondere die dekorativen Eigenschaften und die Schlagfestigkeit eines Kantenelements zu erhöhen, wird dem sichtbaren Teil des Elements oftmals eine speziell geformte Oberfläche verliehen, beispielsweise in Form eines Spitzbogens oder Halbkreises. Ebenso erscheint es gelegentlich wünschenswert, diese sichtbare Fläche mit einer Zier- oder Schutzschicht, einer Folienbeschichtung oder Prägung zu versehen. Dies erweist sich bei einer gewölbten Oberfläche als schwierig, so daß es vorteilhaft wäre, wenn das gewünschte Dekor auf eine ebene Fläche aufgebracht und diese erst anschließend in die gewünschte Form gebracht werden könnte.

In Übereinstimmung mit einem ersten Aspekt der Erfindung wird ein längliches Kantenelement dargestellt, das im einzelnen folgende Komponenten umfaßt:
eine erste Komponente aus Kunststoff,
eine zweite, streifenförmige Komponente aus Kunststoff mit einem freiliegenden Rand, die an einer Stelle mit der ersten Komponente verbunden ist,
Teile zur Befestigung eines freiliegenden Rands der besagten zweiten Komponente an der ersten Komponente, und zwar mit einigem Abstand von der Verbindungsstelle zwischen erster und zweiter Komponente, so daß die zweite Komponente die erste Komponente mindestens teilweise bedeckt.

In einer ersten Ausführung ist die erste Komponente als ebene Wand geformt, und die zweite Komponente ist breiter als der Abstand zwischen der Verbindungs- und der Befestigungsstelle zwischen erster und zweiter Komponente, so daß beim Zusammenfügen der beiden Komponenten die zweite Komponente gebogen wird und die erste Komponente ihre Form weitestgehend beibehält. Dadurch entsteht zwischen den Wänden ein Hohlraum, der bei über die gesamte Breite konstanter Dicke und Biegsamkeit der zweiten Komponente eine annähernd halbkreisförmige Form annimmt. Alternativ kann die Dicke und/oder Steifheit (z.B. Shore-Härte) über die Breite der zweiten Komponente variiert werden (z.B. mit zunehmendem Abstand von der Verbindungsstelle der beiden Komponenten), so daß beim Zusammenfügen der ersten und der zweiten Komponente eine andere, nicht halbkreisförmige Form entsteht.

In einer anderen Ausführung werden eine oder mehrere in die erste Komponente integrierte oder an dieser befestigte Strukturen ausgebildet, die innerhalb des Hohlraums liegen und an der Innenfläche der zweiten Komponente einrasten. Derartige Strukturen, etwa in Form von Rippen, können zur Abstützung einer halbkreisförmigen zweiten Komponente dienen oder diese durch entsprechende Deformation in eine andere Form zwingen. Dies kann beispielsweise durch Rippen unterschiedlicher Länge erreicht werden.

In einer weiteren Ausführung kann die Abstützung der zweiten Komponente durch Befestigung einer parallel verlaufenden Verstärkungswand an der zum Hohlraum weisenden Seite der zweiten Komponente erfolgen, so daß zumindest ein wesentlicher Teil der zweiten Komponente abgestützt wird. Die Stützwand wird biegsam ausgelegt, so daß sie sich trotz der Stützwirkung zusammen mit der zweiten Komponente biegen kann.

In wieder einer anderen Anwendung ist die erste Komponente des Kantenelements als Hohlkörper mit Auflagefläche gestaltet, beispielsweise als hohles D-förmiges Element, so daß bei Zusammenfügung der beiden Komponenten das zweite Element die Form der Auflagefläche annimmt. Alternativ kann die erste Komponente auch massiv ausgeführt werden.

In noch einer anderen Anwendung verfügen die an der ersten Komponente befestigten Strukturen über Halterungen zur Aufnahme von Kabeln, Leitungsrohren und dergleichen.

Nach Möglichkeit sind auch Vorrichtungen zur Befestigung des Profils am betreffenden Gegenstand - beispielsweise einem Möbelstück - vorzusehen. In einer Ausführung wird Selbstklebeband an der ersten Komponente befestigt, alternativ sind jedoch alle geeigneten Vorrichtungen möglich. Auch Löcher für mechanische Befestigungselemente wie Schrauben, Nägel oder Clips können vorgefertigt werden. Vorzugsweise wird ein Steckfortsatz an einer ebenen Wand der ersten Komponente ausgeformt, der etwa im rechten Winkel zu der Wand steht und in einer entsprechenden Vertiefung an dem betreffenden Gegenstand einrastet.

Die Befestigungselemente können unterschiedliche Formen aufweisen. In einer bevorzugten Ausführung wird eine Clipvorrichtung auf der Grundlage eines Steckfortsatzes an der ersten bzw. der zweiten Komponente verwendet. Dieser Fortsatz wird in eine entsprechend ausgeformte Vertiefung an der anderen Komponente eingeführt, die eine schmal zulaufende Öffnung aufweist, so daß der mit Widerhaken versehene Steckfortsatz einrastet.

Das Kantenelement kann zwar mit allen beliebigen geeigneten Produktionsverfahren - beispielsweise als Formteil oder durch Verkleben der ersten und zweiten Komponente - hergestellt werden, vorzuziehen ist jedoch eine Extrusion des Kantenelements. Am vorteilhaftesten ist die Coextrusion von erster und zweiter Komponente aus den unterschiedlichen Kunststoffqualitäten oder -typen. Verschiedene Kunststoffe, u.a. PVC, ABS und PP, jedoch auch viele andere, sind hierfür geeignet.

Ein weiterer Aspekt der Erfindung ist ein Verfahren zur Herstellung eines verzierten oder in anderer Form beschichteten Kantenelements. Besagtes Verfahren beinhaltet die Fertigung eines Kantenelements nach der vorstehend beschriebenen Art, das flache Auslegen der zweiten Komponente, das Aufbringen einer Zier- oder Schutzschicht, einer Folienbeschichtung, eines Aufdrucks oder einer Prägung auf die zweite Komponente und das anschließende Zusammenfügen der beiden Komponenten. Das Zusammenfügen kann unmittelbar nach dem Aufbringen der Zier-/Schutzschicht am Produktionsort oder aber unmittelbar vor dem Anbringen auf dem Gegenstand durch den Monteur erfolgen.

Um das Verständnis der Erfindung zu erleichtern, sind nachfolgend verschiedene Ausführungen beispielhaft und mit Verweis auf die beigefügten Zeichnungen beschrieben, für die folgendes gilt:
Abbildung 1 ist eine Schnittdarstellung des Profils eines nach vorliegender Erfindung hergestellten Extrusionselements.
Die Abbildungen 2 bis 4 sind alternative Ausführungen des in Abbildung 1 dargestellten Profils in kleinerem Maßstab.
Abbildung 5 zeigt eine weitere Ausführung, bei der die erste Komponente als hohles D-förmiges Element geformt ist.
Abbildung 6 entspricht den Abbildungen 2 und 4, zeigt jedoch zusätzlich Rippen mit Kabelhalterungen.

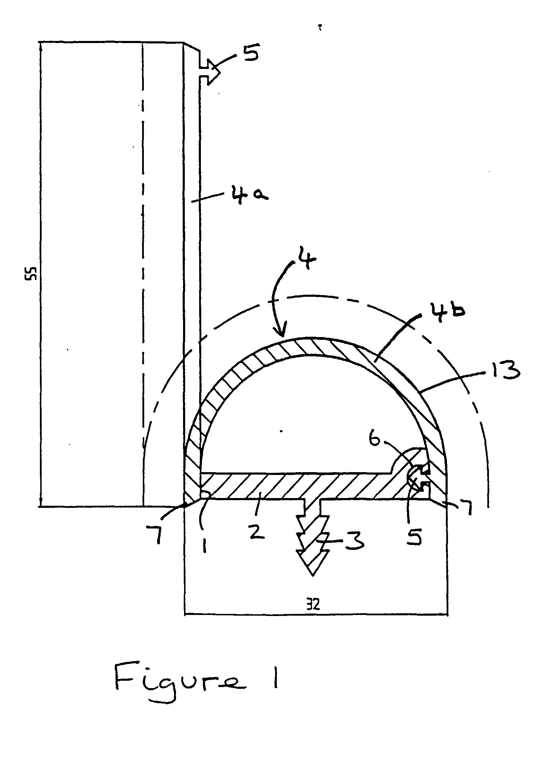

Abbildung 1 zeigt den Querschnitt eines länglichen, extrudierten Kunststoffprofils. Das Profil besteht aus zwei Komponenten, die mittels Coextrusion als einteiliges Element hergestellt werden. Die beiden Komponenten sind in Abbildung 1 in unterschiedliche Richtungen schraffiert dargestellt; die Verbindungslinie der beiden Komponenten ist mit 1 gekennzeichnet.

Die erste Komponente ist aus einem Hartkunststoff wie PVC gefertigt und besteht aus einer ersten Wand 2, die im allgemeinen gerade ist. Wand 2 verfügt über einen Steckfortsatz mit Widerhaken 3, mit dem das Profil an einem Gegenstand (nicht abgebildet) befestigt werden kann.

Die zweite Komponente besteht aus einem Weichkunststoff wie Weich-PVC und verfügt über eine zweite Wand 4, die länger als Wand 2 ist. Eine typische Länge für Wand 2 beträgt 32 mm, die Wand 4 ist 55 mm lang.

Zunächst verlaufen die Wände 2 und 4 transversal zueinander, möglichst, wie abgebildet, im rechten Winkel, andere Winkel sind aber auch möglich. Zur Formung des Kantenelements wird jedoch die zweite, zunächst gerade Wand aus Position 4a in Position 4b umgebogen, in der die freiliegenden Ränder der Wände 2 und 4 zusammengefügt werden. Dazu wird Wand 4 mit einem Fortsatz in Pfeilspitzenform 5 gefertigt, der in Vertiefung 6 in Wand 1 paßt. Vertiefung 6 verfügt über einen schmal zulaufenden Hals, der verhindert, daß Fortsatz 5 ohne weiteres herausgezogen werden kann. In diesem Zustand findet das Element Anwendung, indem es mit dem mit Widerhaken versehenen Fortsatz 3 oder einer anderen Vorrichtung an einem Gegenstand befestigt wird und so als längliches Kantenelement dient, das zum einen einem praktischen Zweck zum Schutz des Gegenstands vor Beschädigungen dient und/oder einen ästhetischen Zweck als Zierprofil erfüllt.

Nach Möglichkeit ragen die Enden von Wand 4 leicht über die Ränder von Wand 2 heraus (siehe 7) und sind vorzugsweise wie gezeigt etwas abgeschrägt, um kleinere Unregelmäßigkeiten der Oberfläche, an der das Element angebracht wird, auszugleichen und/oder einen gewissen Schutz gegen das Eindringen von Feuchtigkeit unter das montierte Element zu bieten.

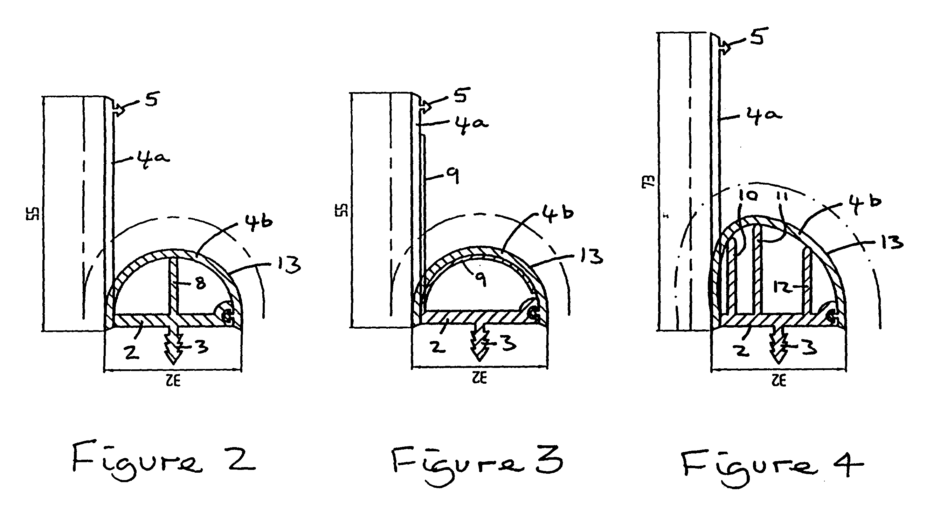

Abbildung 2 zeigt eine zweite Ausführung der Erfindung, in der eine aus einem Stück mit Wand 2 geformte Rippe 8 im rechten Winkel etwa auf halber Länge aus Wand 2 hervortritt und das Innere des Elements in zwei Hälften unterteilt. In diesem Fall ist Rippe 8 so lang, daß keine Änderung der natürlichen Wandform erfolgt, sondern die Rippe als Abstützung für Wand 4 dient. Die Stützwirkung kann selbstverständlich durch eine größere Anzahl von Rippen verstärkt werden.

Eine alternative Form der Abstützung ist in Abbildung 3 dargestellt, in der besagte zweite Komponente zusätzlich eine Verstärkungswand 9 aufweist, die parallel zu Wand 4 an deren Innenseite verläuft, so daß bei Biegung von Wand 4 aus Position 4a in Position 4b Wand 9 ebenfalls umgebogen wird. Wand 9 besteht aus dem gleichen harten Material, beispielsweise PVC-hart wie Wand 2, verfügt jedoch über einen dünneren Querschnitt, so daß Wand 9, anders als Wand 2, biegsam ist. Daher nimmt Wand 9 bei Biegung von Wand 4 die Bogenform wie in Abbildung 3 gezeigt auf, verfügt jedoch über natürliche federartige Eigenschaften, durch die ständig eine Tendenz zur Rückkehr in die Ausgangsposition besteht; damit wirkt sie als wirksame Abstützung für das weiche Material von Wand 4 und gewährleistet deren Formstabilität.

Abbildung 4 zeigt, wie die Form von Wand 2 gegenüber der sich andernfalls natürlich ergebenden annähernd halbrunden Form mittels integrierter Rippen 10, 11, 12 verändert werden kann. Diese Rippen wurden wie Rippe 8 (Abbildung 2) in einem Stück mit Wand 2 geformt, weisen jedoch Längen auf, durch die Wand 2 in eine von ihrer natürlichen Form abweichende Form gezwungen wird. Dies kann aus praktischen Erwägungen oder lediglich aus ästhetischen Gründen durchgeführt werden.

Das hohle Innere des Elements kann zur Aufnahme von Versorgungsleitungen wie Rohrleitungen oder Kabeln dienen und, wie in Abbildung 6 gezeigt, Rippen mit Halterungen aufweisen. Wenn der Hohlraum, wie in Abbildung 2, 4 und 6, in zwei oder mehr Fächer unterteilt wird, können die verschiedenen Fächer zur separaten Aufnahme unterschiedlicher Versorgungsleitungen dienen.

Die äußere Oberfläche 13 von Wand 4 (angedeutet durch die Strichpunktlinie in den Abbildungen) kann als einziger nach der Montage sichtbare Teil des Elements in der Originalfarbe belassen oder mit einer spezifischen Beschichtung versehen werden, um den gewünschten Ziereffekt - etwa einen Holz- oder Steineffekt - zu erzielen. Die Oberfläche kann auch geprägt oder auf andere Weise in 3-D-Optik gestaltet werden.

Abbildung 5 entspricht den Abbildungen 1-4 und 6, unterscheidet sich von diesen jedoch dadurch, daß die erste Komponente eine gerade Wand 2 und eine gebogene Auflagewand 2a aufweist, so daß ein hohles D-Profil entsteht. Wenn Wand 4 - die zweite Komponente - aus Position 4a in Position 4b um die erste Komponente gebogen wird, nimmt Wand 4 die Form der Auflagefläche an.

In den vorangegangenen Ausführungen war die zweite Komponente an einem Rand mit der ersten Komponente verbunden und wurde am anderen mit dieser zusammengefügt, es ist jedoch auch vorstellbar, daß die zweite Komponente an einer anderen Stelle (also nicht am Rand) mit der ersten Komponente verbunden sein kann, also beispielsweise in der Mitte. Damit würde die zweite Komponente über zwei freie Ränder zur Befestigung an der ersten Komponente verfügen.

## Patentansprüche

1. Ein längliches Kantenelement, bestehend aus:
einer ersten Komponente aus Kunststoff,
einer zweiten, streifenförmigen Komponente aus Kunststoff mit freiliegendem Rand, die an einer Stelle mit der ersten Komponente verbunden ist,
Teile zur Befestigung des besagten freiliegenden Rands der zweiten Komponente an der ersten Komponente, und zwar mit einigem Abstand von der Verbindungsstelle zwischen erster und zweiter Komponente, so daß die zweite Komponente die erste Komponente mindestens teilweise bedeckt.

2. Ein längliches Kantenelement gemäß Anspruch 1, bei dem die erste Komponente als ebene Wand und die zweite Komponente als zweite Wand geformt ist, welche länger als der Abstand zwischen den Verbindungs- und Befestigungsstellen zwischen erster und zweiter Komponente ist, so daß die zweite Komponente beim Zusammenfügen beider Komponenten eine gebogene Form annimmt und die erste Komponente ihre Form weitgehend beibehält, wobei durch die Wände ein Hohlraum gebildet wird.

3. Ein längliches Kantenelement gemäß Anspruch 1, bei dem die erste Komponente eine Auflagefläche aufweist, so daß die zweite Komponente beim Zusammenfügen beider Komponenten die Form der Auflagefläche annimmt.

4. Ein längliches Kantenelement gemäß Anspruch 2, bei dem mindestens eine von der ersten Komponente ausgehende Rippe in den Hohlraum hineinragt, wobei die mindestens eine Rippe an der zum Hohlraum weisenden Oberfläche der zweiten Komponente einrastet.

5. Ein längliches Kantenelement gemäß allen vorgenannten Ansprüchen, bei dem die Steifheit der zweiten Komponente geringer ist als die der ersten Komponente.

6. Ein längliches Kantenelement gemäß allen vorgenannten Ansprüchen, das mittels Coextrusion aus verschiedenen Kunststoffqualitäten oder -typen hergestellt wird.

7. Ein längliches Kantenelement gemäß allen vorgenannten Ansprüchen, bei dem entweder die Dicke oder die Steifheit des Materials der zweiten Komponente sich mit zunehmendem Abstand von der Verbindungsstelle zwischen erster und zweiter Komponente ändert.

8. Ein längliches Kantenelement gemäß Anspruch 1 und 2 sowie 4-7, bei dem die zweite Komponente über eine parallel verlaufende Verstärkungswand auf der zur ersten Komponente weisenden Seite verfügt.

9. Ein längliches Kantenelement gemäß allen vorgenannten Ansprüchen, bei dem das Befestigungselement einen Widerhaken an der ersten oder der zweiten Komponente und eine entsprechende Vertiefung auf der jeweils anderen Komponente aufweist.

10. Ein längliches Kantenelement gemäß allen vorgenannten Ansprüchen, das über Vorrichtungen zur Befestigung des Kantenprofils an dem Gegenstand, an dem es angebracht werden soll, verfügt.

11. Ein längliches Kantenelement gemäß Anspruch 10, bei dem das Befestigungselement einen Fortsatz mit Widerhaken, Klebeband oder Löcher für mechanische Befestigungselemente umfaßt.

12. Ein Verfahren zur Produktion eines mit Zier- oder sonstiger Beschichtung versehenen Kantenelements, das die Herstellung eines Kantenelements gemäß allen vorgenannten Ansprüchen beinhaltet und bei dem die zweite Komponente zur Aufbringung einer Zier- oder Schutzschicht, einer Folienbeschichtung, eines Aufdrucks oder einer Prägung in einer flachen Position gehalten wird, sowie das anschließende Zusammenfügen der Komponenten 1 und 2.
